# EUROPEAN PATENT APPLICATION

(11) **EP 3 048 517 A1**
(43) Date of publication of application: **27.07.2016**
(21) Application number: 15305081.0
(22) Date of filing: 26.01.2015
(51) Int. Cl.: G06F 3/0481, G06F 3/0485, H04L 12/58, H04M 1/725

(54) **METHOD AND DEVICE FOR DISPLAYING A PART OF A DIALOG**

(71) Applicant: Thomson Licensing, 92130 Issy-les-Moulineaux (FR)
(72) Inventor: ELUARD, Marc, 35576 Cesson-Sévigné (FR); HAVET, Ludovic, 35576 Cesson-Sévigné (FR); GUILLEMOT, Didier, 35576 Cesson-Sévigné (FR)
(74) Representative: Huchet, Anne

(57) **Abstract**

A method, performed by a device, for displaying a part of a dialog between at least two participants is disclosed. The dialog comprises a set of speaking items generated by the participants, and the speaking items generated by a single participant are arranged in a single column for display. The method comprises obtaining a sliding window comprising speaking items and moving according to information received from scrolling means. The method further comprises displaying a subset of speaking items arranged in columns, such that the width of a displayed speaking item is determined as a function of the number of participants having at least one speaking item in the sliding window. The sliding window acts like a information limiting entity of the complete conversation information.

A device for implementing the method and a computer program product are further disclosed.

## Description

### 1. FIELD OF THE INVENTION

In the following, a method for displaying a part of a dialog is disclosed. Such displaying is useful to provide convenient access to parts of a dialog, that can be a movie script, or a conversation over network systems such as instant messaging or emails. The method only assumes that the participants in the dialog generate dialog items over time. Corresponding device is also disclosed.

### 2. BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Methods are known in the movie script domain to display dialogs between characters. The prior art, consisting of script edition tools, poorly manages the representation of dialogs in a scene. Indeed the formatting of a script has remained the same since the early typewriters. Each element of the script respects a particular format: a character is always written in capital letter at exactly 3.5 inches from the left edge. In addition, a script is always written in a single column in black and white. This formatting is historical and visually acceptable for those who are used to read movie scripts. However, dialog reading is a painful task for unused people.

Methods are also known for displaying a dialog between people in the mobile phone domain, such as for example smartphone applications used to browse SMS. In Android smartphones, identification of contacts is based on their relative position on the screen: the messages generated by the smartphone owner are generally on the right while the received messages are on the left. The contact with whom the smartphone owner is discussing, is identified once at the top of the screen. Consequently Android smartphones display dialogs with only a single contact at a time. Apple smartphones display dialogs between the smartphone owner and several contacts in a single display by displaying the contact name on top of each message. Generally the smartphone prior art methods display conversations as two overlapping columns where the messages are aligned either on the left side or on right side of the screen depending on the sender of the messages. The width allocated to display a message is bounded to a maximum, that is less than the size of the screen, and does not depend on the amount of messages consecutively generated by the different contacts. Moreover, the smartphone prior art methods only address the problem of displaying a dialog between the smartphone owner and some of its contacts in a point to point manner (i.e. when the network allowing the communication between contacts is a point to point network). It does not address the problem of rendering a dialog in a group of people where any person can hear what is said by anybody else in the group, as it could happen in a real conversation between a group of people sharing a same location. More generally, it does not solve the problem of rendering a group conversation where group participants share a same multicast network, allowing any participant to receive what is said / sent by anybody else in the group. Eventually, smartphone display methods cannot be applied to the movie script domain either, as they represent the dialog from a particular person point of view : the smartphone owner, which is not applicable to a movie script dialog representation.

Using prior art dialog display methods, navigating into a conversation whatever the number of participants, or into a movie script dialog whatever the number of characters in a scene, remains a painful task for readers. There is thus a need for better and visual ways to display a movie script dialog or a conversation history browsing among a group of people.

### 3. BRIEF SUMMARY OF THE INVENTION

A salient idea is to create a synthetic representation of a dialog over time in a sliding window by displaying dialog speaking items generated by a participant in a column, and by displaying only the columns corresponding to the participants that have dialog speaking items in the sliding window. Depending on the number of participants having dialog speaking items in the sliding window, the width that can be devoted to the display of each dialog speaking item is dynamically adjusted. The order in which the columns are displayed is also defined so as to minimize column swaps while scrolling into the dialog. A method allowing to determine a set of dialog items for display over a sliding window is disclosed hereafter.

To this end a method, performed by a device, for displaying a part of a dialog between at least two participants is disclosed. The dialog comprises a set of speaking items generated by the participants, and the speaking items generated by a single participant are arranged in a single column for display. The method comprises obtaining a sliding window comprising speaking items and moving according to information received from scrolling means. The method further comprises displaying a subset of speaking items arranged in columns, such that the width of a displayed speaking item is determined as a function of the number of participants having at least one speaking item in the sliding window.

According to a preferred embodiment, displaying a subset of speaking items further comprises determining the width of a displayed speaking item as an equal split of the total display width between the number of participants having at least one speaking item in the sliding window.

According to a particularly advantageous variant, the dialog between at least two participants, further comprises a set of descriptive items wherein the width of a displayed descriptive item, is adjusted to the total display width.

According to another particularly advantageous variant, the sliding window comprises a constant number of dialog items, wherein a dialog item is a speaking item or a descriptive item.

According to another particularly advantageous variant, displaying a subset of speaking items arranged in columns, further comprises obtaining a rank for each participant and ordering the columns according to their corresponding rank.

According to another particularly advantageous variant, displaying a subset of speaking items further comprises obtaining the rank for each participant as the order of appearance of the first speaking item generated by the corresponding participant in the dialog.

According to another particularly advantageous variant, displaying a subset of speaking items further comprises computing the rank for each participant as a ratio of the cumulated size of the speaking items generated by the participant in the dialog, over the cumulated size of all the speaking items of the dialog.

According to another particularly advantageous variant, a speaking item comprises the total amount of dialog generated by a participant without interruption.

According to another particularly advantageous variant, a speaking item comprises a sentence.

According to another particularly advantageous variant, a speaking item comprises a word.

In a second aspect, a device for displaying a part of a dialog between at least two participants is disclosed, wherein the dialog comprises a set of speaking items generated by the participants. The speaking items generated by a single participant are arranged in a single column for display. The device further comprises means for obtaining a sliding window comprising speaking items and moving according to information received from scrolling means. The device further comprises means for displaying a subset of speaking items arranged in columns, such that the width of a displayed speaking item is determined as a function of the number of participants having at least one speaking item in the sliding window.

In another preferred embodiment, the means for displaying a subset of speaking items further comprises means for determining the width of a displayed speaking item as an equal split of the total display width between the number of participants having at least one speaking item in the sliding window.

In another preferred embodiment, the dialog between at least two participants, further comprises a set of descriptive items wherein the width of a displayed descriptive item, is adjusted to the total display width.

In another preferred embodiment, the sliding window comprises a constant number of dialog items, wherein a dialog item is a speaking item or a descriptive item.

In another preferred embodiment, the means for displaying a subset of speaking items arranged in columns, further comprises means for obtaining a rank for each participant and means for ordering the columns according to the rank.

In a third aspect, a device comprising at least one processor adapted to compute the steps of the displaying method in any of its embodiments is also disclosed.

In a fourth aspect, a computer-readable storage medium storing program instructions computer-executable to perform the disclosed methods, is also disclosed.

In a fifth aspect, a computer program product comprising instructions of program code for execution by at least one processor to perform the displaying methods, is also disclosed.

While not explicitly described, the present embodiments may be employed in any combination or sub-combination. For example, the disclosed method, device, or computer program are not limited to the described dialog characteristics.

Besides, any characteristic or variant described for the displaying method is compatible with a device intended to process the disclosed method, with a computer-readable storage medium storing program instructions, and with a computer program product.

### 4. BRIEF DESCRIPTION OF THE DRAWINGS

In the drawings, an embodiment of the present invention is illustrated. It shows:
- **Figure 1** depicts a processing device for displaying a part of a dialog according to a specific and non-limitative embodiment of the invention;
- **Figure 2** represents an exemplary architecture of the processing device of figure 1 according to a specific and non-limitative embodiment of the invention;
- **Figure 3** represents a flow chart of a method for displaying a part of a dialog according to a specific and non-limitative embodiment of the invention;
- **Figure 4** represents an example of a dialog and of a sliding window according to a specific and non-limitative embodiment of the invention;
- **Figure 5** represents possible examples of displaying a part of a dialog in different scrolling situations, according to a specific and non-limitative embodiment of the invention.

### 5. DETAILED DESCRIPTION OF THE INVENTION

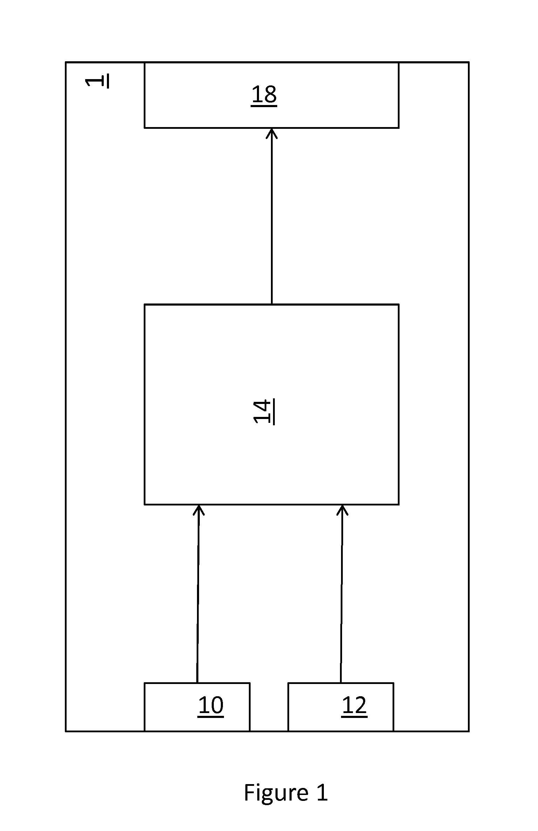

**Figure 1** depicts a processing device 1 for displaying a part of a dialog between at least two participants where a dialog comprises a set of speaking items generated by the participants, and where speaking items generated by a single participant are displayed in a single column. A group dialog may be of multiple form. It may be a dialog between a set of characters in a scene of a movie script. It may also be a dialog between several individuals over a network enabling multipoint communication means, where what is said by a group member may be received by anybody else in the group. A dialog between individuals communicating over a point to point network is also compatible with the invention. In the remaining of the document we describe the group dialog as a dialog between characters in a scene of a movie script, but the invention is applicable to any kind of group conversations including those over network systems.

According to a specific and non-limitative embodiment of the invention, the processing device 1 comprises an input 10 configured to receive the dialog data which are obtained from a source. According to different embodiments of the invention, the source belongs to a set comprising:
- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface);

The processing device 1 also comprises an input 12 to receive scrolling data from a user. Scrolling data are generated by a user via a scrolling mean in order to browse the dialog downward or upward. According to different embodiments of the invention, the scrolling mean belongs to a set comprising:
- a scroll wheel in a mouse for computer;
- a jog dial in a smartphone;
- at least two keys of a keyboard with user understandable signs such as upward and downward arrows;
- sub areas of a pad or of a touch screen, where one area is dedicated to scroll in one direction, and the other to scroll in the other direction.

More generally any scrolling mean allowing to provide user requests for moving into one direction or the other, is compatible with this invention.

The inputs 10 and 12 are linked to a processing module 14 configured to display on a display mean called output 18, a subset of dialog items according to the data received from the scrolling mean 12. According to a particular embodiment the display mean is external to the device and the module 18 is an output that sends the data to display to the external display mean. According to different embodiments of the invention, the display mean, internal or external, belongs to a set comprising:
- a personal computer screen;
- a TV screen;
- a tablet screen;
- a smartphone screen.
More generally any display mean allowing to display a subset of the dialog items, is compatible with this invention.

In a variant, the dialog data can be stored in a memory or can be sent to a destination. As an example, such information is stored in a remote or in a local memory, e.g. a video memory or a RAM, a hard disk. In a variant, the information is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

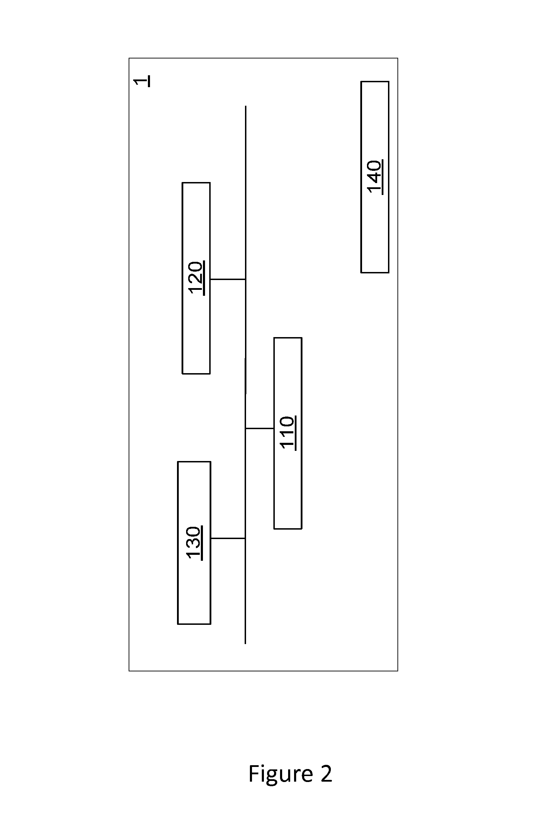

**Figure 2** represents an exemplary architecture of the processing device 1 according to a specific and non-limitative embodiment of the invention. The processing device 1 comprises one or more processor(s) 110, which is(are), for example, a CPU, a GPU and/or a DSP (English acronym of Digital Signal Processor), along with internal memory 120 (e.g. RAM, ROM, EPROM). The memory stores a database comprising dialog data. The processing device 1 comprises one or several Input/Output interface(s) 130 adapted to send to display output information and/or allow a user to enter commands and/or data (e.g. a keyboard, a mouse, a touchpad, a webcam, a display); and a power source 140 which may be external to the processing device 1. The processing device 1 may also comprise network interface(s) (not shown).

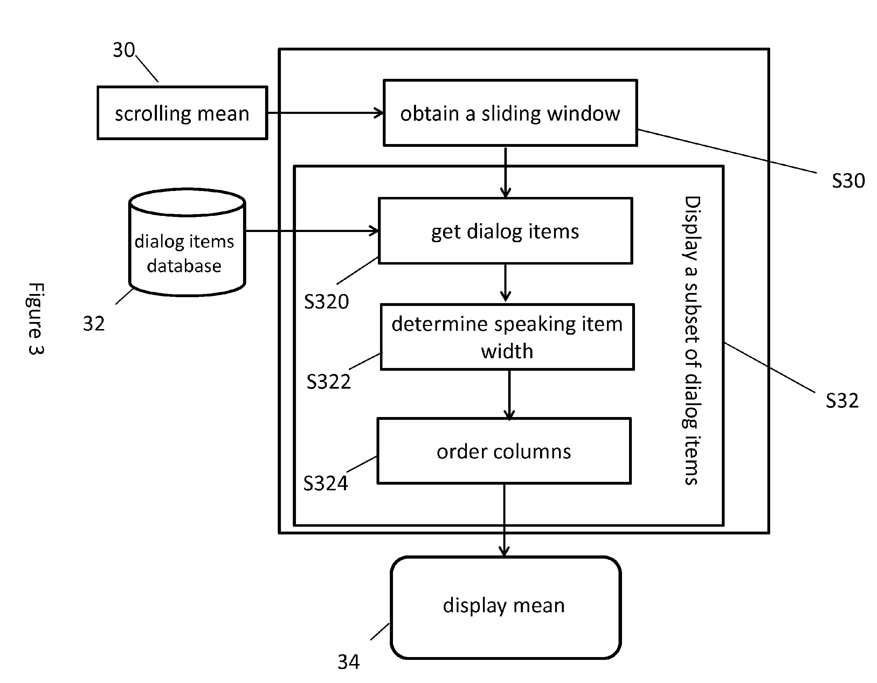

According to an exemplary and non-limitative embodiment of the invention, the processing device 1 further comprises a computer program stored in the memory 120. The computer program comprises instructions which, when executed by the processing device 1, in particular by the processor 110, make the processing device 1 carry out the processing method described with reference to figure 3. According to a variant, the computer program is stored externally to the processing device 1 on a non-transitory digital data support, e.g. on an external storage medium such as a HDD, CD-ROM, DVD, a read-only and/or DVD drive and/or a DVD Read/Write drive, all known in the art. The processing device 1 thus comprises an interface to read the computer program. Further, the processing device 1 could access one or more Universal Serial Bus (USB)-type storage devices (e.g., "memory sticks.") through corresponding USB ports (not shown).

According to exemplary and non-limitative embodiments, the processing device 1 is a device, which belongs to a set comprising:
- a mobile device ;
- a communication device ;
- a game device ;
- a tablet (or tablet computer) ;
- a laptop ;
- a web server (e.g. a broadcast server, a video-on-demand server).

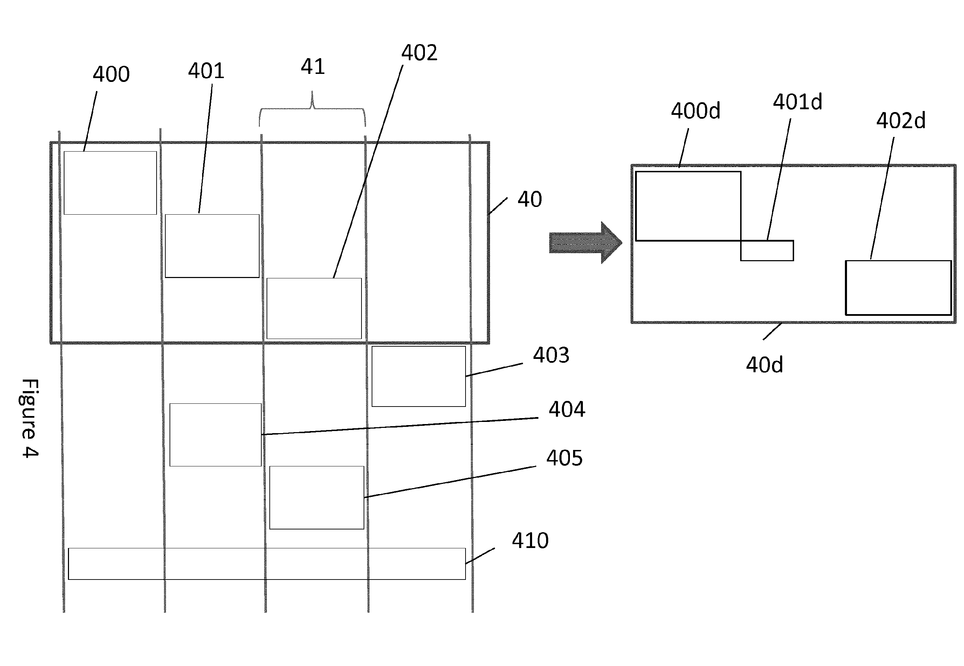

**Figure 3** represents a flow chart of a method for displaying a part of a dialog between at least two participants. Without any limitation or loss of generality, but in order to increase the clarity, the dialog is described as a script for a movie, where a dialog participant is a character of the movie, but the invention is applicable to any kind of group dialog. A dialog comprises dialog items, where a dialog item is of several types. A first type of dialog item, called speaking item 400 as shown on figure 4, is a piece of dialog said by one character. It comprises one or more sentences. A second type of dialog item, called descriptive item 410 as shown on figure 4, is a description of an action performed by one or more characters in the scene, or a description of a situation in the scene. Advantageously a speaking item 400 comprises a piece of dialog said by one character without interruption by another character or by a descriptive item. Dialog items are used as unitary blocs for the group dialog display method, as described later. In a variant a dialog item is a sentence. In another variant a dialog item is a word. In yet another variant a dialog item is a set of words. More generally any type of word or sentence grouping for determining the unitary bloc granularity of a dialog item, is compatible with this invention. Dialog items 400, 410 are stored in a database 32.

In the method of displaying a part of dialog between at least two participants, a sliding window 40 as shown in figure 4, is obtained in a step S30 according to information received from a scrolling mean 30. The sliding window 40 comprises speaking items 400 to 405, arranged in columns so that a column 41 as shown in figure 4, comprises speaking items generated by a unique character. Advantageously dialog items are vertically ordered according to the time they occur in the scene, and the sliding window vertically moves over the columns according to upward or downward information received from a user via the scrolling means. Advantageously the sliding window comprises only complete dialog items. In other words, either a dialog item is in the sliding window or it is not. Advantageously the sliding window comprises a constant number of dialog items. Consequently, whatever its position over the dialog, the size of the sliding window is constant in number of dialog items. In the step S32 of display of a subset of dialog items, dialog items are retrieved from the database 32 in a sub step S320. The number of retrieved dialog items depends on the sliding window size. The dialog items themselves depend on the sliding window position. More precisely the dialog items currently comprised in the sliding window are retrieved from the database 32. In the sub step S322 the width of the displayed speaking items present in the sliding window is determined as a function of the number of participants having at least one speaking item in the sliding window. In other words the number of characters having a piece of dialog in the sliding window is determined and then used to optimize the display area in order to have a better rendering of the current dialog. Advantageously the width of a displayed speaking item is an equal split of the total display width between the number of participants having at least one speaking item is the sliding window. In a variant only the maximum width of a displayed speaking item is an equal split of the total display width between the number of participants having at least one speaking item is the sliding window. In other words, the width of a displayed speaking item may be less than the equal split of the total display width, if the size of the speaking item is small. More generally any function used to determine a speaking item width based on the number of participants having at least one speaking item in the sliding window, is compatible with the invention.

The size of the sliding window has a direct impact on the display of the dialog items. The size of the sliding window is expressed in number of dialog items. In one extreme, if the size of the sliding window is equal to the number of dialog items of the whole dialog, all the columns are displayed whatever information is received from the scrolling means. On the other extreme, if the size of the sliding window is equal to two, then a maximum of two columns are displayed. Therefore, in order to limit the number of displayed character's dialog to two, the size of the sliding window is set to two. Advantageously the size of the sliding window is adjusted to the available display area of the display mean 34. For example with a small display size, it is advantageous to choose the size of the sliding window in order to enforce a maximum threshold regarding the number of displayed characters, as the number of displayed characters is always smaller than the sliding window size. In a first variant the size of the sliding window is constant for the whole script. In a second variant the size of the window is constant for a scene of the movie script. In yet another variant the size of the sliding window is constant over a scene or the movie script, but reduced to a few dialog items when the sliding window is at the top or at the bottom of the dialog.

In a particular embodiment, the width of the displayed descriptive items is adjusted to the total display width. In a variant, the maximum width of the displayed descriptive items is adjusted to the total display width. For example, if the amount of data comprised in the descriptive item is small, the width of the displayed descriptive item may be less than the total display width.

In the sub step S324, columns are ordered for display. As the number of columns varies according to the sliding window move and to the speaking items it comprises, a strategy is determined so as to order the columns for display. In a particular embodiment, a rank is obtained for a column, and the columns are ordered according to the rank. In a first variant, the first rank, and therefore the first column is allocated to the character who has the first speaking item in the dialog, the second column to the second and so on. This variant is simple but it may imply many column changes for the same character while scrolling in the dialog, even in a reduced set of characters. Too frequent column swaps make the reading of the movie script a painful task for a user. In a second variant, a rank is determined in function of characteristics of its corresponding character. For example a characteristic of a character is the importance of the character in the movie, set by the script author. In another example a characteristic of a character is the importance of the character in the scene of the movie. In another variant the rank of a column is determined as a ratio of the cumulated size of the speaking items generated by the corresponding character in the dialog, over the cumulated size of all the speaking items of the dialog. In some way, the rank therefore reflects the importance of the character in the dialog. In another variant the rank is determined as a ratio of the cumulated size of the speaking items generated by the character over the cumulated size of all the speaking items, wherein the sizes are cumulated over the sliding window. In yet another variant, the rank is dynamically computed so as to minimize the column swaps while scrolling over the dialog.

Then the subset of dialog items, arranged in columns are displayed on a display mean 34. Advantageously when the last scrolling event received from the scrolling mean indicates downward, the first dialog item of the sliding window is displayed first, and when the last scrolling event received from the scrolling means indicates upward, the last dialog item of the sliding window is displayed first.

**Figure 4** represents an example of a dialog and of a sliding window according to a specific and non-limitative embodiment of the invention. The dialog represented in figure 4 comprises six speaking items 400, 401, 402, 403, 404, 405 and one descriptive item 410. The dialog comprises four characters, and therefore the speaking items are arranged in four columns 41. The sliding window 40 is located at the top of the dialog and comprises three speaking items 400, 401, 402, generated by three different characters. Therefore according to a specific and non-limitative embodiment of the invention, the total width of the display is split in three equal parts for determining the maximum width allocated for the display 40d of the speaking items of the sliding window 40. Displayed speaking items 400d, 401 d, 402d correspond to the speaking items 400, 401 and 402 of the sliding window 40. As speaking items 400, 402 contain a sufficient amount of text the width of their corresponding displayed speaking items is equal to split of the total width display. As the speaking item 401 contains a small amount of text, the width of its corresponding displayed speaking item 401 d is less than the equal split of the total width display. Also the displayed speaking items are arranged in columns wherein the columns are ordered according to the rank of the corresponding character.

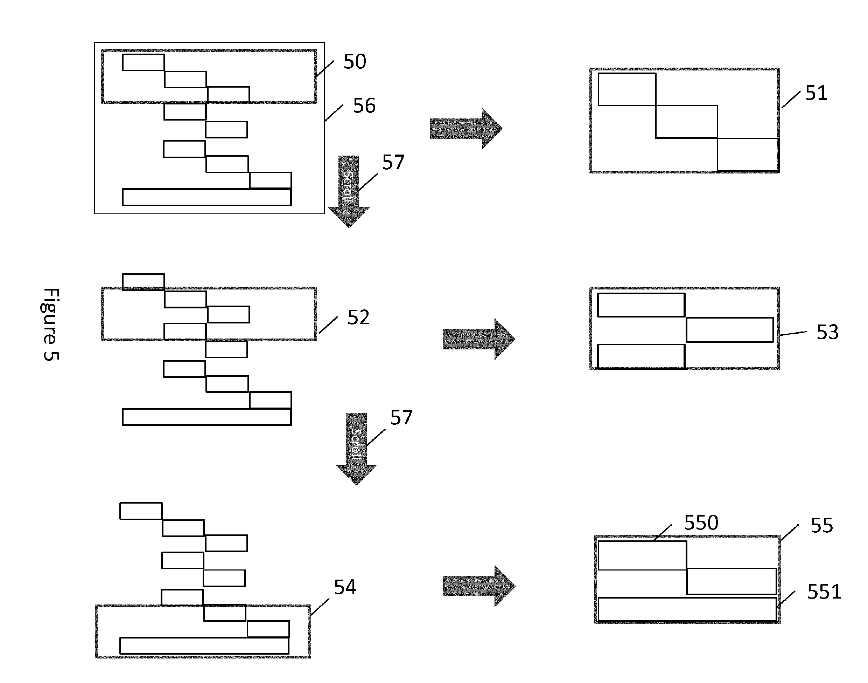

**Figure 5** represents possible examples of displaying a part of a dialog between four characters in different scrolling situations, according to a specific and non-limitative embodiment of the invention. A sliding window is represented in three different positions 50, 52 and 54 over a dialog 56 according to downward information 57 received from a scrolling mean. The sliding window 50 comprises three speaking items generated by three different participants. According to a specific and non-limitative embodiment of the invention, the total width of the display is split in three equal parts for determining the width allocated for the display 51 of the speaking items of the sliding window 50. According to downward information received from a scrolling mean, the sliding window 52 has moved downward of one dialog item. The sliding window 52 comprises three speaking items generated by two different participants. According to a specific and non-limitative embodiment of the invention, the total width of the display is split in two equal parts for determining the width allocated for the display 53 of the speaking items of the sliding window 52. After the reception of more downward scrolling information, the sliding window 54 is at the bottom of the dialog and comprises three dialog items among which two dialog items are speaking items and one dialog item is a descriptive item. The sliding window 54 comprises speaking items generated by two different participants. According to a specific and non-limitative embodiment of the invention, the total width of the display is split in two equal parts for determining the width allocated for the display 55 of the displayed speaking items 550 of the sliding window 52. According to a specific and non-limitative embodiment of the invention, the displayed descriptive item 551 width is adjusted to the total width of the display 55 of the dialog subset.

## Claims

1. A method, performed by a device, for displaying a part of a dialog between at least two participants wherein :
- said dialog comprises a set of speaking items (400, 401, 402, 403, 404, 405) generated by said at least two participants, said speaking items generated by a single participant are arranged in a single column (41) for display;
said method being **characterized in that** it comprises:
- obtaining (S30) a sliding window (40) comprising speaking items (400, 401, 402) and moving according to information received from scrolling means (30);
- displaying (S32) a subset of speaking items (400, 401, 402) arranged in columns, such that the width of a displayed speaking item (400d, 401 d, 402d) is determined as a function of the number of participants having at least one speaking item (400, 401, 402) in said sliding window (40).

2. The method according to claim 1 wherein displaying (S32) said subset of speaking items (400, 401, 402) further comprises determining (S322) said width of a displayed speaking item (400d, 402d) as an equal split of the total display width between the number of participants having at least one speaking item (400, 401, 402) in said sliding window (40).

3. The method according to claim 1 or 2 wherein said dialog between at least two participants, further comprises a set of descriptive items (410) wherein the width of a displayed descriptive item, is adjusted to the total display width.

4. The method according to claim 3 wherein said sliding window (40) comprises a constant number of dialog items, wherein a dialog item is a speaking item (400, 401, 402, 403, 404, 405) or a descriptive item (410).

5. The method according to one of claims 1 to 4 wherein displaying (S32) said subset of speaking items (400, 401, 402) arranged in columns, further comprises obtaining a rank for each of said participant and ordering (S324) said columns according to said rank.

6. The method according to claim 5 wherein displaying (S32) said subset of speaking items (400, 401, 402) further comprises obtaining said rank for each participant as the order of appearance of the first speaking item generated by the corresponding participant in said dialog.

7. The method according to claim 5 wherein displaying (S32) said subset of speaking items (400, 401, 402) further comprises computing said rank for each participant as a ratio of the cumulated size of the speaking items generated by said participant in the dialog, over the cumulated size of all the speaking items of the dialog.

8. The method according to one of claims 1 to 7 wherein said speaking item comprises the total amount of dialog generated by a participant without interruption.

9. The method according to one of claims 1 to 7 wherein said speaking item comprises a sentence.

10. The method according to one of claims 1 to 7 wherein said speaking item comprises a word.

11. A device (1) for displaying a part of a dialog between at least two participants wherein :
- said dialog comprises a set of speaking items (400, 401, 402, 403, 404, 405) generated by said at least two participants, said speaking items generated by a single participant are arranged in a single column (41) for display;
said device further comprising:
- means for obtaining (14) a sliding window (40) comprising speaking items (400, 401, 402) and moving according to information received from scrolling means (12);
- means for displaying (14) a subset of speaking items (400, 401, 402) arranged in columns, such that the width of a displayed speaking item (400d, 401 d, 402d) is determined as a function of the number of participants having at least one speaking item (400, 401, 402) in said sliding window (40).

12. The device (1) according to claim 11, wherein said means for displaying (14) said subset of speaking items (400, 401, 402) further comprises means for determining said width of a displayed speaking item (400d, 402d) as an equal split of the total display width between the number of participants having at least one speaking item (400, 401, 402) in said sliding window (40).

13. The device (1) according to claim 11 or 12 wherein said sliding window (40) comprises a constant number of dialog items, wherein a dialog item is a speaking item (400, 401, 402, 403, 404, 405) or a descriptive item (410).

14. The device (1) according to one of claims 11 to 13, wherein said means for displaying (14) said subset of speaking items (400, 401, 402) arranged in columns, further comprises means for obtaining a rank for each of said participant and means for ordering said columns according to said rank.

15. A computer program product comprising instructions of program code to display a part of a dialog between at least two participants, when the program code is executed by at least one processor wherein :
- said dialog comprises a set of speaking items (400, 401, 402, 403, 404, 405) generated by said at least two participants, said speaking items generated by a single participant are arranged in a single column (41) for display;
said computer program product being **characterized in that** it comprises instructions of program code being configured to:
- obtain a sliding window (40) comprising speaking items (400, 401, 402) and moving according to information received from scrolling means (12);
- display a subset of speaking items (400, 401, 402) arranged in columns, such that the width of a displayed speaking item (400d, 401 d, 402d) is determined as a function of the number of participants having at least one speaking item (400, 401, 402) in said sliding window (40).
